# EUROPÄISCHE PATENTANMELDUNG

(11) **EP 0 862 106 A1**
(43) Veröffentlichungstag der Anmeldung: **02.09.1998**
(21) Anmeldenummer: 97121701.3
(22) Anmeldetag: 10.12.1997
(51) Int. Cl.: G06F 1/16, A45C 5/12

(54) **EDV-System-Koffer**

(30) Priorität: 27.02.1997 DE 19707920
(71) Anmelder: PARAT-WERK SCHÖNENBACH GmbH + Co KG, D-42897 Remscheid (DE)
(72) Erfinder: Wimmer, Hermann, 94089 Neureichenau (DE); Wöss, Alois, 4161 Ulrichsberg (AT)
(74) Vertreter: Patentanwälte Ostriga & Sonnet

(57) **Zusammenfassung**

Dargestellt und beschrieben ist ein Koffer für transportable Geräte der Datenverarbeitung mit Mitteln zur Halterung des Gerätes zumindest im geschlossenen Transportzustand des Koffers, die in zwei Gruppen von Haltemitteln auf die beiden Schalen des Koffers aufgeteilt sind, wobei der einen Schale die Gruppe von Haltemitteln zur Festlegung des Geräts gegen Verlagerung parallel zu einer Ebene (Positioniermittel) und der anderen Schale zumindest ein Haltemittel zur Festlegung des Geräts gegen Verlagerung lotrecht zu dieser Ebene (Arretiermittel) zugeordnet sind, wobei die beiden Gruppen von Haltemitteln nur bei geschlossenem Koffer zusammenwirken und zumindest das Arretiermittel lediglich druckschlüssig an Außenflächen des Geräts angreift und in Anpassung an unterschiedliche Gerätehöhen verstellbar angeordnet und diese Verstelleinrichtung zumindest vorübergehend selbsthaltend ausgebildet ist. Eine quasi automatische Einrichtung der Arretiermittel auf ein Gerät vorgegebener Größe wird erfindungsgemäß dadurch erzielt, daß das Arretiermittel bei geöffnetem Koffer in eine das kleinstmögliche Gerät erfassende Position einstellbar ist und sich beim Schließen des Koffers und Kontaktieren des Arretiermittels mit der Außenfläche des Gerätes selbsttätig auf die passende Position einstellt, bis zur endgültigen Fixierung selbsthaltend ist, und daß diese Position mittels einer wiederlösbaren Fixiervorrichtung endgültig arretierbar ist.

## Beschreibung

Die Erfindung bezieht sich auf einen Koffer entsprechend dem Oberbegriff des Anspruchs 1.

Tragbare Computer, sogenannte Notebooks, sind im mobilen Einsatz mittlerweile weit verbreitet. Für den Transport der Notebooks und gegebenenfalls eines Druckers sowie weiterer Zusatzgeräte und Zubehör sind Koffer bekannt, die in der Regel zweischalig, mit einem Unterteil und einem diesen gegenüber aufklappbaren Oberteil, ausgebildet sind. Im Unterteil befindet sich eine Auflagefläche für einen Computer und/oder einen Drucker.

Aufgabe geeigneter Koffer für Notebooks und Zubehör ist es, diese Geräte sicher zu transportieren. Dafür sind in der Regel Haltemittel für den Computer und/oder die weiteren Geräte im Innern des Koffers vorgesehen, die diese beim Transport festhalten und somit gegen Verlagerung sichern.

Aus DE 29618083 U1 ist ein Koffer bekannt, bei dem Mittel zur Halterung des Gerätes in zwei Gruppen von Haltemitteln auf die beiden Schalen des Koffers aufgeteilt sind. Dabei handelt es sich um Haltemittel zur Festlegung des Gerätes gegen Verlagerung parallel zu der Ebene eines Kofferbodens, die als Positioniermittel bezeichnet sind, und um Arretiermittel zur Festlegung des Gerätes gegen Verlagerungen lotrecht zu dieser Ebene. Die Arretier- und die Positioniermittel wirken nur bei geschlossenem Koffer zusammen und greifen lediglich an Außenflächen des Gerätes an. Außerdem sind die Arretier- und Positioniermittel jeweils in und entgegen der zu verhindernden Verlagerungsrichtung verstellbar sowie in ihrer eingestellten Position festlegbar. Dies hat den Vorteil, daß Notebooks oder Drucker unterschiedlicher Höhe, Breite oder Tiefe mit dem gleichen Koffer transportiert werden können. Die Arretier- und Positioniermittel können dazu an die jeweiligen Geräte angepaßt werden.

Die Anpassung der Positioniermittel an die Geräte ist sehr einfach und bei geöffnetem Koffer zu bewerkstelligen. So werden beispielsweise im Stand der Technik in den Ebenen verschiebbare Winkel und Leisten an die Außenflächen des Gerätes, diese kontaktierend, herangeschoben und festgelegt.

Auch die Einstellung der von tellerartigen Druckstücken mit Gewindezapfen gebildeten, im Kofferdeckel angebrachten Arretiermittel ist prinzipiell problemlos durchführbar. Sie wirken mit in der Oberschale angeordneten Mutterkörpern zusammen und lassen sich durch Hinein- und Herausdrehen auf die Höhe verschiedener Gerätetypen anpassen. Da die Bestückung der Koffer mit den Geräten in der Regel nicht beim Kofferhersteller erfolgt, müssen dem Benutzer Maßangaben oder Abstandslehren entsprechend den unterschiedlichen Gerätehöhen mitgegeben werden. Der Anpaßvorgang kann einem Benutzer kompliziert erscheinen, insbesondere, da eine Überprüfung der gewählten Einstellung nur bei geschlossenem Koffer, also nicht visuell, erfolgen kann.

Der Benutzer wird folglich durch Ausprobieren versuchen, die Mittel im geöffneten Zustand des Koffers auf die Geräte einzustellen. Anschließend wird der Koffer geschlossen, und es muß durch Bewegen des Koffers überprüft werden, ob das Gerät oder die Geräte im Kofferinneren etwa noch unzulässig bewegbar sind oder gar zu stark eingeklemmt werden. Die optimale Position wird dabei oft erst nach mehrfachem Durchlaufen dieser Prozedur gefunden.

Daher ist für den Benutzer eine weitere Vereinfachung der Einstellbarkeit der Arretiermittel wünschenswert, vor allem beim Austausch eines in seinen Dimensionen vom auszutauschenden Gerät abweichenden Gerät.

Der Erfindung liegt demgemäß die Aufgabe zugrunde, einen Koffer der im Oberbegriff des Anspruchs 1 umrissenen Art anzugeben, bei dem das Arretiermittel auf besonders einfache Weise und auch vom handwerklich Ungeübten rasch an das im Koffer befindliche Gerät anpaßbar ist.

Die Erfindung löst diese Aufgabe mit den Merkmalen des Anspruchs 1 und ist demnach dadurch gekennzeichnet, daß das Arretiermittel bei geöffnetem Koffer in eine das kleinstmögliche Gerät erfassende Position einstellbar ist und sich beim Schließen des Koffers und Kontaktieren des Arretiermittels mit der Außenfläche des Gerätes selbsttätig auf die passende Position einstellt, bis zur endgültigen Fixierung selbsthaltend ist, und daß diese Position mittels einer wiederlösbaren Fixiervorrichtung endgültig arretierbar ist.

Das Prinzip der Erfindung beruht somit im wesentlichen darauf, Arretiermittel in einer Kofferschale derart auszubilden und anzuordnen, daß bei geöffnetem Koffer das Arretiermittel zunächst in eine Maximalauslage bringbar ist. Beginnt man den Koffer zu schließen, so kontaktiert das Arretiermittel eine Außenfläche des Gerätes und verstellt sich dabei, bis der Koffer vollständig geschlossen ist, in die gewünschte und dem momentan verwendeten Gerät exakt entsprechende Position. Nun wird der Koffer wieder geöffnet, wobei das Arretiermittel in der voreingestellten Position verbleibt. Anschließend wird diese Position endgültig fixiert.

Gemäß einer vorteilhaften Ausführungsform ist jedes Arretiermittel von einem schwenkbaren Niederhalter gebildet, der in der Kofferoberschale oder an einer Zwischenwand, die an der Kofferoberschale angeordnet ist, angelenkt ist. Vor dem Anpassen wird bei geöffnetem Koffer der Niederhalter in eine Position verschwenkt, in der er beim Schließen des Kofferdeckels die Außenflächen des Gerätes berührt, das in der Kofferunterschale untergebracht ist. Während des Schließens der Deckelschale wird der Niederhalter in seine Endposition verschwenkt. Nun wird der Koffer geöffnet und der Niederhalter mittels einer Spannschraube festgelegt. Somit vollzieht sich die Anpassung des Arretiermittels an das Gerät praktisch selbsttätig und ist deshalb ausgesprochen einfach und benutzerfreundlich.

Weitere zweckmäßige und vorteilhafte Merkmale der Erfindung ergeben sich aus den Unteransprüchen, wie auch aus der nachfolgenden Beschreibung der Erfindung, anhand eines in den Zeichnungen dargestellten Ausführungsbeispieles. In den Zeichnungen zeigen:
Fig. 1 eine Draufsicht auf den geöffneten Koffer mit hochgestelltem Deckel,
Fig. 2 einen Querschnitt durch den Koffer gemäß Schnittlinie II-II in Fig. 1, wobei der Kofferdeckel bezüglich Fig. 1 abgesenkt ist,
Fig. 3 einen weiteren Schnitt gemäß Fig. 2, nunmehr mit geschlossenem Kofferdeckel,
Fig. 4 eine teilweise geschnittene Ansicht eines Niederhalters mit einer Spannschraube und einem Lager und
Fig. 5 Niederhalter und Lager gemäß Schnittlinie V-V in Fig. 4.

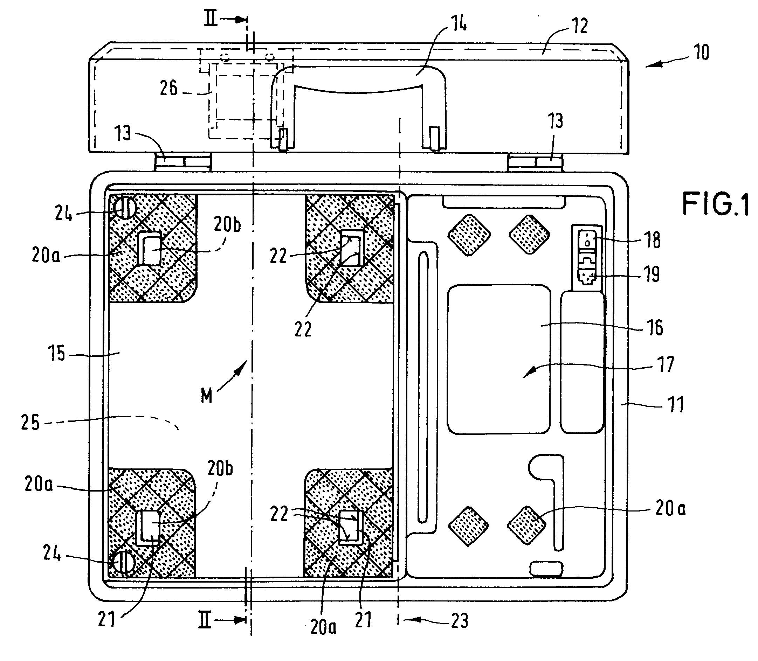

Der in Fig. 1 beispielhaft dargestellte und in seiner Gesamtheit mit 10 bezeichnete Koffer ist ein zweiteiliger Schalenkoffer mit einer Unterschale 11 und einer Oberschale 12, wobei die Kofferschalen 11, 12 mittels gegebenenfalls aushängbarer Scharniere 13 schwenkbar miteinander verbunden sind. An einem Griff 14 kann der Koffer 10 getragen werden.

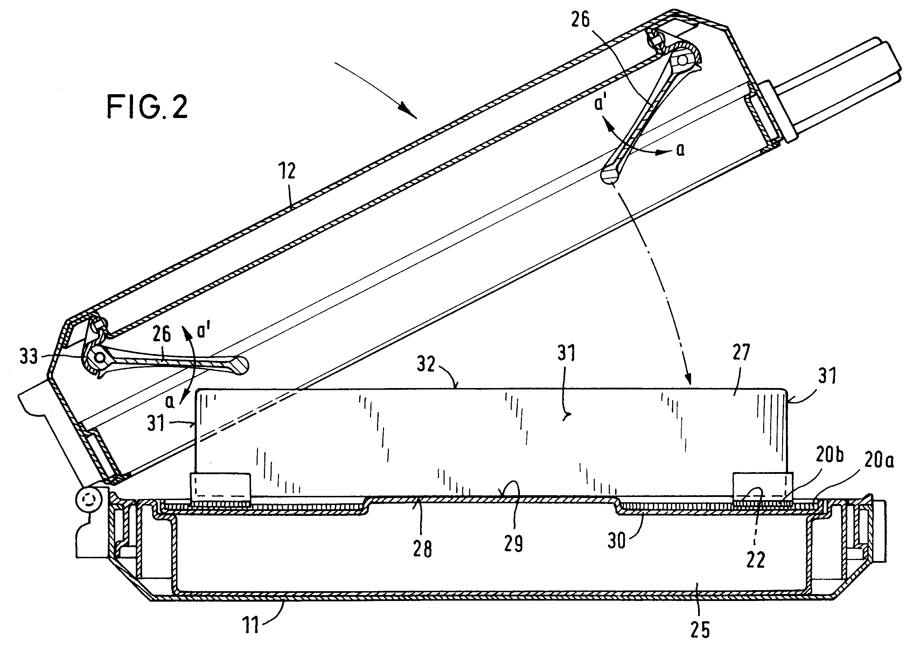

Die Kofferunterschale 11 unterteilt sich in einen Anordnungs-Bereich 15 für ein Notebook 27 (Fig. 2) und einen Anordnungs-Bereich 16 für einen nicht dargestellten Drucker. Unter dem Bereich 16 für den Drucker befindet sich ein Stauraum 17 für Kabel und Zubehör, wie Transformator, Maus od.dgl. Ein Netzschalter 18 und Buchsen oder Steckelemente 19 ermöglichen ein komfortables Anschließen von Kabeln und die Einspeisung der gegebenenfalls benötigten Netzspannung.

Die Bereiche 15, 16 für Notebook und Drucker weisen Flächenhaftelemente 20a auf, auf denen Anschläge 21 beliebig anordenbar sind. Die Anschläge 21 sind als Winkel ausgebildet, deren Innenflächen 22 zur Anlage an die Geräteecken dienen. Die Winkel sind auf flachen Böden angeordnet, deren den Haftelementen 20a zugewandten Seiten ebenfalls Gegenhaftelemente 20b aufweisen, die zu den Haftelementen 20a komplementär und mit diesen in Eingriff bringbar sind. Die Haftelemente 20a, 20b können beispielsweise aus Klettverschluß-Material gebildet sein.

Der gesamte Bereich 15 für ein Notebook 27 ist als Platte 30 (Fig. 2) ausgebildet, die um eine Achse 23 aus der Unterschale 11 heraus verschwenkt werden kann. Die Platte 30 kann mittels eines oder mehrerer Riegel 24 an der Unterschale 11 wiederlösbar gehalten werden. Unter der Platte 30 befindet sich zusätzlicher Stauraum 25, beispielsweise für Handbücher.

In der Kofferoberschale 12 erkennt man zwei Niederhalter 26. Diese sind bei geschlossenem Koffer etwa an der Mittelebene M angeordnet, so daß sie jeden gebräuchlichen Gerätetyp erfassen können.

In Fig. 2 ruht die Bodenfläche 28 des Gerätes 27 auf der Auflagefläche 29 der Platte 30. Die Böden der Anschläge 21 können dabei ebenfalls als Auflagebereiche für die Bodenfläche 28 des Gerätes 27 fungieren. Wesentlich ist jedoch der Kontakt der Seitenflächen 31 des Gerätes 27 mit den Innenflächen der Anschläge 21.

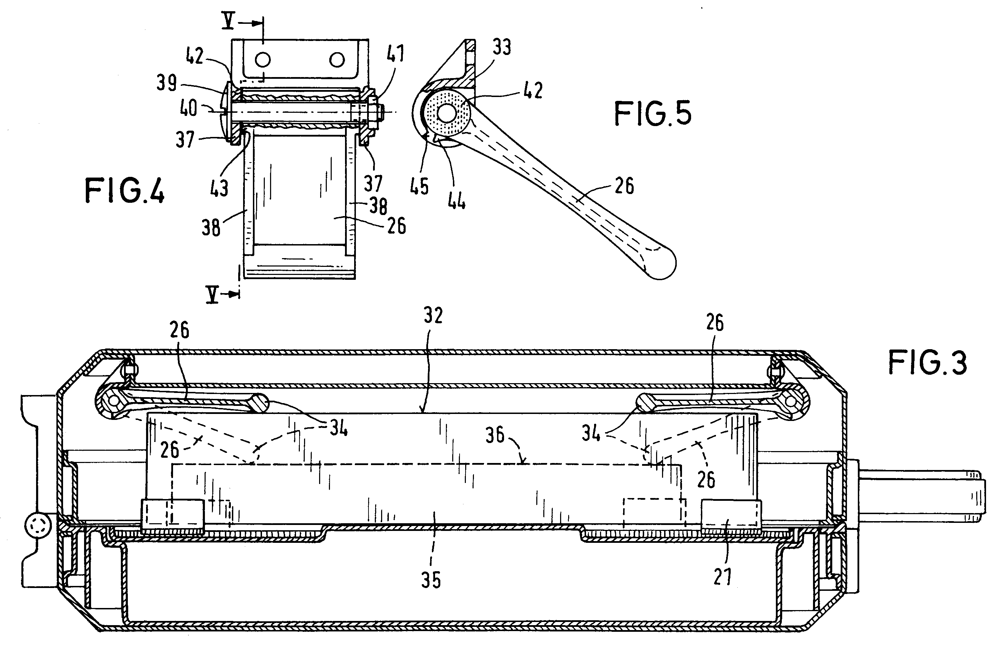

Die in der Oberschale 12 angeordneten Niederhalter 26 sind um eine horizonte Achse 40 (Fig. 4) schwenkbar gelagert. Vor dem Schließen der Oberschale 12 werden sie in Richtung a aus der Oberschale 12 herausgeschwenkt. Beim Schließen des Koffers 10 werden Sie in Richtung a' teilweise zurückverschwenkt und verbleiben beim anschließenden Öffnen des Koffers 10 selbsttätig in dieser, derart automatisch voreingestellten Position.

Fig. 2 zeigt die Kofferoberschale 12 bezüglich Fig. 1 zur Kofferunterschale 11 hin verschwenkt. Die beiden Niederhalter 26 sind in eine Position herausverschwenkt, in der sie beim weiteren Schließen der Kofferoberschale 12 die Außenfläche 32 des Gerätes 27 kontaktieren. Jeder Niederhalter 26 ist in einem Lager 33 gehalten, das an der Kofferoberschale 12 befestigt, z.B. angenietet ist.

Fig. 3 zeigt den Koffer 10 im geschlossenen Zustand. Die Niederhalter 26 liegen auf der Außenfläche 32 des Gerätes 27 auf. Der Bereich 34 am freien Ende des Niederhalters 26, der auf der Außenfläche 32 des Gerätes 27 aufliegt, kann weich ausgebildet oder mit einem Polster versehen sein.

Fig. 3 zeigt zusätzlich ein schmaleres und niedrigeres Gerät 35 (gestrichelt), das ebenfalls von dem Schwenkbereich der Niederhalter 26 erfaßt wird.

Fig. 4 zeigt den Niederhalter 26 und sein Lager 37 in Ansicht mit einem Schnitt durch den gemeinsamen Gelenkbereich. Der Niederhalter 26 ist nach Art eines einarmigen Schwenkhebels ausgebildet und umfaßt Profilrippen 38 zur Verstärkung. Der Niederhalter ist beispielsweise als Spritzgießteil aus Polyamid hergestellt.

Das Lager 33 umgreift zumindest teilweise spangenartig den Niederhalter 26. Eine Spannschraube 39 durchgreift fluchtende Bohrungen im Lager 33 und im Niederhalter 26. Die Achse 40 der Spannschraube 39 fällt mit der Schwenkachse des Niederhalters 26 zusammen. Eine in die Lagerwange 37 eingelegte und undrehbar in ihr gehaltene Mutter 41 dient der Sicherung der Spannschraube 39.

Fig. 5 zeigt den Niederhalter 26 und das Lager 33 im Schnitt. Sowohl an dem Niederhalter 26 als auch am Lager 33 weisen einander berührende Flächen 42, 43 hohe Haftreibung auf, was beispielsweise durch Aufrauhen des Kunststoffs erreicht wird. Die Haftreibung könnte auch z.B. mittels eines Reibbelages zustande kommen, der auf die Flächen 42, 43 aufgebracht ist.

Im Ausführungsbeispiel sind die dem Niederhalter 26 zugewandten Innenseiten 43 der Lagerwangen 37 des Lagers 33 als Reibflächen ausgebildet.

Es ist ebenso möglich, andere Bereiche des Lagers 33 im Zusammenwirken mit gegenüberliegenden Bereichen des Niederhalters 26 als Reibflächen auszubilden. In dem gezeigten Ausführungsbeispiel ist die gewählte Anordnung der Reibflächen 42, 43 jedoch vorteilhaft, da ein Spannen der Spannschraube 39 die Lagerwangen 37 zusammenpreßt und damit den Druck der Reibflächen 42, 43 aufeinander erhöht, und die Reibflächen 42, 43 dadurch zu Haftflächen werden. Aufgrund der vor dem Spannen der Spannschraube 39 bestehenden hohen Reibkraft ist nun nur noch ein verhältnismäßig geringer Kraftaufwand nötig, um die Reibflächen zu Haftflächen werden zu lassen.

Eine Anschlagsnase 44 am Niederhalter 26 verhindert im Zusammenwirken mit einem Widerlager 45 des Lagers 33 eine Lotrechtstellung des Niederhalters 26 bezüglich der Außenflächen 32, 36 des Gerätes 27, 35. Auch eine Stellung des Niederhalters 26 unter einem Winkel von nahezu 90° bezüglich der Außenflächen 32, 36 ist ausgeschlossen. Dadurch ist sichergestellt, daß sich der Niederhalter 26 beim Kontaktieren der Außenflächen 32, 36 zuverlässig verschwenkt, sich jedoch nicht verklemmen kann, wodurch das Gerät beschädigt werden könnte.

Besonders einfach gestaltet sich für den Benutzer das Umrüsten der Arretiermittel auf ein in seinen Dimensionen vom vorherigen abweichenden Gerät. Es genügt lediglich, die Spannschraube 39 zu lösen, die Niederhalter 26 auszulegen und den Koffer 10 zu schließen. Anschließend wird die Spannschraube 39 bei geöffnetem Koffer 10 fixiert. Eine einfachere Handhabung ist kaum vorstellbar.

## Patentansprüche

1. Koffer für transportable Geräte der Datenverarbeitung, wie Computer, Drucker und Zubehör- sowie Peripheriegeräte wie Netzteil, Kabel, Maus, Druckerpapier od.dgl., mit einer Unterschale und einer dieser gegenüber schwenkbar angeordneten sowie im geschlossenen Zustand den Kofferdeckel ausbildenden Oberschale, mit Mitteln zur Halterung des Gerätes zumindest im geschlossenen Transportzustand des Koffers, wobei diese Mittel in zwei Gruppen von Haltemitteln auf die beiden Schalen des Koffers aufgeteilt sind, wobei der einen Schale die Gruppe von Haltemitteln zur Festlegung des Geräts gegen Verlagerung parallel zu einer Ebene (Positioniermittel) und der anderen Schale zumindest ein Haltemittel zur Festlegung des Geräts gegen Verlagerung lotrecht zu dieser Ebene (Arretiermittel) zugeordnet sind, wobei die beiden Gruppen von Haltemitteln nur bei geschlossenem Koffer zusammenwirken und zumindest das Arretiermittel lediglich druckschlüssig an Außenflächen des Geräts angreift und in Anpassung an unterschiedliche Gerätehöhen verstellbar angeordnet und diese Verstelleinrichtung zumindest vorübergehend selbsthaltend ausgebildet ist, dadurch gekennzeichnet, daß das Arretiermittel bei geöffnetem Koffer (10) in eine das kleinstmögliche Gerät erfassende Position einstellbar ist und sich beim Schließen des Koffers (10) und Kontaktieren des Arretiermittels mit der Außenfläche (32) des Gerätes (27) selbsttätig auf die passende Position einstellt, bis zur endgültigen Fixierung selbsthaltend ist, und daß diese Position mittels einer wiederlösbaren Fixiervorrichtung (39) endgültig arretierbar ist.

2. Koffer nach Anspruch 1, dadurch gekennzeichnet, daß die Positioniermittel (21) der Unterschale (11) des Koffers (10) und das Arretiermittel der Oberschale (12) des Koffers (10) zugeordnet sind und das Arretiermittel von einem an der Kofferoberschale (12) gehaltenen Lager (33) verstellbar aufgenommen ist.

3. Koffer nach Anspruch 1 oder 2, dadurch gekennzeichnet, daß jedes Arretiermittel von einem schwenkbaren Niederhalter (26) gebildet ist.

4. Koffer nach Anspruch 3, dadurch gekennzeichnet, daß wenigstens ein Schwenkbegrenzungsanschlag für den Niederhalter (26) vorgesehen ist.

5. Koffer nach Anspruch 4, dadurch gekennzeichnet, daß am Niederhalter (26) eine Anschlagsfläche (44) angeordnet ist, die mit einem gegenüberliegenden Gegenanschlag (45) des Lagers (33) zusammenwirkt.

6. Koffer nach einem der vorhergehenden Ansprüche, dadurch gekennzeichnet, daß dem Niederhalter (26) und an seinem Lager (33) Paarungsreibflächen (42, 43) zur Selbsthaltung der eingestellten Position des Niederhalters (26) zugeordnet sind.

7. Koffer nach Anspruch 6, dadurch gekennzeichnet, daß wenigstens eine der Flächen (42, 43) aufgerauht ist.

8. Koffer nach Anspruch 7, dadurch gekennzeichnet, daß der schwenkbare Niederhalter (26) mit einer Spannverschraubung (39) fixierbar ist, deren Achse (40) mit der Schwenkachse des Niederhalters (26) zusammenfällt.

9. Koffer nach einem der Ansprüche 3 bis 8, dadurch gekennzeichnet, daß in einem Bereich (34) des Niederhalters (26), der an den Außenflächen (32) des Gerätes angreift, ein elastisches Polster angeordnet ist.

10. Koffer nach einem der vorangegangenen Ansprüche, dadurch gekennzeichnet, daß die Gruppe der Positioniermittel eine Anzahl von Haftelementen (20a) auf der Auflagefläche für das Gerät (27) und beliebig auf den Haftelementen (20a) anordenbare Anschläge (21) für das Gerät (27) umfaßt, wobei die Anschläge (21) auf ihren den Haftelementen (20a) zugewandten Seiten jeweils mit zu den Haftelementen (20a) komplementären Gegenhaftelementen (20b) versehen sind.

11. Koffer nach Anspruch 10, dadurch gekennzeichnet, daß die Anschläge (21) als Eckwinkel zur Anlage an die Geräteecken ausgebildet sind.
